# EUROPEAN PATENT APPLICATION

(11) **EP 4 729 371 A2**
(43) Date of publication of application: **22.04.2026**
(21) Application number: 25190032.0
(22) Date of filing: 16.07.2025
(51) Int. Cl.: B60R 25/30, G01S 5/14

(54) **CHANNEL SOUNDING LOCALIZATION WITH MULTIPLE VEHICLE ANCHORS**

(30) Priority: 18.07.2024 RO 202400424
(71) Applicant: NXP USA, Inc., Austin, TX 78735 (US)
(72) Inventor: Dumitrache, Daniela Andreea, 5656AG Eindhoven (NL); Petria, Silviu Petrut, 5656AG Eindhoven (NL); Waheed, Khurram, 5656AG Eindhoven (NL); Stanciu, Mihai-Ionut, 5656AG Eindhoven (NL); Grumei, Teodor Cosmin, 5656AG Eindhoven (NL)
(74) Representative: Colaiuda, Antonella

(57) **Abstract**

A method for Channel Sounding (CS) localization with multiple vehicle anchors includes performing a CS procedure to generate a first remote data at a digital key and a first local data at a first one of a plurality of anchors. A first distance between the digital key and the first anchor is determined from the first remote data received from the digital key and the first local data. A connection handover from the first anchor to a second one of a plurality of anchors is performed. The CS procedure is performed to generate a second remote data at the digital key and a second local data at the second anchor. A second distance between the digital key and the second anchor is determined from the second remote data received from the digital key and the second local data. A location of the digital key is trilaterated using at least the first distance and the second distance.

## Description

### FIELD

This disclosure relates generally to wireless communication, and more specifically to Channel Sounding (CS) localization of a digital key relative to a position of a vehicle.

### BACKGROUND

Bluetooth LE (Low Energy) Channel Sounding (CS) has emerged as a candidate technology for secure car access, with the Car Connectivity Consortium (CCC) considering it for adoption in future releases of its Digital Key specification. CS may also be referred to as High Accuracy Distance Measurement (HADM). CS uses phase-based ranging and improves distance measurement accuracy down to the order of tens of centimeters, improving upon traditional techniques such as Received Signal Strength Indicator (RSSI), Angle of Arrival (AoA) and Angle of Departure (AoD). CCC is a cross-industry organization, focused on smartphone-to-car connectivity solutions, that has defined a standard that enables mobile devices to securely store, authenticate and share digital keys for vehicles.

Single point-to-point CS may determine only distance and proximity, since distance measurements are performed between one CS initiator and one CS reflector. To determine accurate position in the car access scenario, the digital key would have to perform CS measurements through trilateration using multiple anchors. This would result in increased processing time and memory requirements for the digital key, as it would have to maintain one connection per anchor. In addition, CS requires high memory on a device as the size of the data needing to be stored and transferred is large.

### BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.
FIG. 1 is a schematic view of a digital key interacting with a vehicle, in accordance with an embodiment of the present disclosure.
FIG. 2 is a schematic view of three sounding events between a digital key in motion and the vehicle resulting in a location bias, in accordance with an embodiment of the present disclosure.
FIG. 3 is a schematic view of three sounding events between a digital key in motion and the vehicle resulting in a location ambiguity, in accordance with an embodiment of the present disclosure.
FIG. 4 is a tabular view of an anchor sequence, in accordance with an embodiment of the present disclosure.
FIG. 5 is another tabular view of an anchor sequence, in accordance with an embodiment of the present disclosure.
FIG. 6 is a schematic view of the motion of the digital key relative to the vehicle showing the requirement for a third anchor, in accordance with an embodiment of the present disclosure.
FIG. 7 is a schematic view of a border line between several coverage areas of the anchors of a vehicle, in accordance with an embodiment of the present disclosure.
FIG. 8 is a flowchart representation of a method for channel sounding localization with the multiple vehicle anchors shown in FIG. 7, in accordance with an embodiment of the present disclosure.
FIG. 9 is a flowchart representation of another method for channel sounding localization with multiple vehicle anchors, in accordance with an embodiment of the present disclosure.
FIG. 10 is a flowchart representation of another method for channel sounding localization with multiple vehicle anchors, in accordance with an embodiment of the present disclosure.
FIG. 11 is a flowchart representation of another method for channel sounding localization with multiple vehicle anchors, in accordance with an embodiment of the present disclosure.

### DETAILED DESCRIPTION

Embodiments described herein provide for a determination of a digital key (e.g., smartphone or key fob), proximity and location using multiple anchors coupled to a vehicle. The term "anchors" as used within this disclosure refers to a transceiver at a fixed location on the vehicle. In one embodiment, the anchors on the vehicle are interconnected through a communication bus, such as a CAN (Control Area Network) or LIN (Local Interconnect Network) bus. The term "vehicle" as used herein includes an automobile, as well as a boat, aircraft or other machine capable of being locked or unlocked in response to a remote device.

Determination of the proximity and location of the digital key may minimize bandwidth and memory storage requirements of the digital key by maintaining only one Bluetooth LE connection, with seamless handover between the vehicle anchors. As the user, (collocated with the digital key), approaches the vehicle, a connection between the digital key and a vehicle anchor is handed over to another anchor based on a location and a signal strength, where each anchor performs a CS distance measurement with the digital key. The measurements results are aggregated to accurately determine the key's location. In one embodiment, vehicle access is granted upon determining a proximity and location of the digital key. In other embodiments, the teachings of this disclosure may be applied to asset tracking, indoor wayfinding and other applications where the relative positioning of a digital key is required.

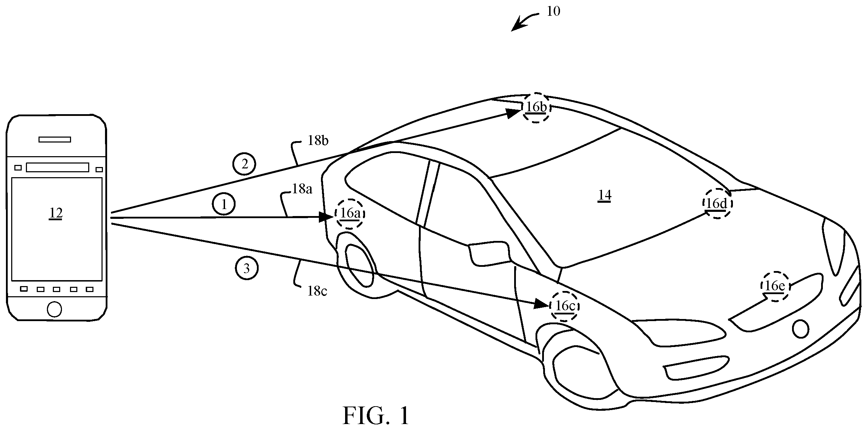

FIG. 1 shows an embodiment 10 of an interaction between a digital key 12 and a vehicle 14, in accordance with the present disclosure. The vehicle 14 includes a plurality of anchors 16a, 16b, 16c, 16d and 16e, (generally 16). In other embodiments, a different number and location of anchors may be used, with a sufficient spacing between each anchor to ensure trilateration accuracy. In the embodiment 10, three communication channels (e.g., "connections") are shown as 18a, 18b and 18c, (generally 18) between the digital key 12 and respective anchors 16a, 16b and 16c.

FIG. 1 shows the anchors 16 coupled externally to the vehicle 14. In other embodiments, the anchors 16 may be inside the vehicle 14 or include a combination of placements inside and outside the vehicle 14. The digital key 12 is shown as a smartphone in FIG. 1 but may also be a key fob or other digital device that the user would carry to access the vehicle 14. In one embodiment, the digital key 12 may connect to the closest anchor 16, depending upon the direction that the user approaches the vehicle 14. In one embodiment, the closest anchor may be inferred from the anchor providing the highest signal quality when communicating with the digital key 12. The digital key 12 may then connect to other anchors, (e.g., the next anchor providing the next highest signal quality). For example in FIG. 1, the digital key 12 may establish a connection with anchor 16a, while executing a CS configuration, then one or more CS procedures. The anchor 16a may then perform a connection handover to anchor 16b. Then the digital key 12 may then execute one or more CS procedures with anchor 16b. Finally, the anchor 16b may then perform a connection handover to anchor 16c. Then the digital key 12 may then execute one or more CS procedures with anchor 16c. During the connection handover, the key device 12 operates as if there is only one continuous connection and is unaware that the connection has been switched between anchors.

When a digital key 12 and an anchor 16 connect, CS configuration steps are followed by repeated CS procedures. During a CS procedure, both the digital key 12 and the anchor 16 obtain local data. The digital key 12 then transfers its local data to the anchor 16 using the Bluetooth LE connection through a GATT (Generic Attribute profile) Ranging Service (RAS). One the anchor 16 has both its local data and the remote data (from the digital key 12), an algorithm may be used to determine a distance between the digital key 12 and the respective anchor 16 used for the connection. By using two determined distances (obtained from sequential connections to respective anchors 16), trilateration may be used to find a location of the digital key 12 relative to the vehicle 14. When the digital key 12 is within an access zone of the vehicle 14, a door of the vehicle 14 may unlock. In one embodiment, the access zone is a proximity to the vehicle. In another embodiment, the access zone is a specifically defined region outside of the vehicle 14.

By using seamless connection handovers between the digital key 12 and the anchors 16 of the vehicle 14, the memory requirements of the digital key 12 are significantly reduced. CS requires a significant amount of memory as large amounts of data are transferred between the digital key 12 and the respective anchor 16. In addition, using the connection handover reduces bandwidth and link layer scheduling. While the digital key 12 perceives a single connection with an anchor 16, the vehicle 14 uses the connection information to allow every anchor 16 to synchronize with the digital key 12 connection events. Data may be transferred between anchors 16 over a Control Area Network (CAN) bus to enable any anchor 16 to assume the connection with the digital key 12 from another anchor 16. Rather than sequentially connecting, performing CS measurements and disconnecting with every anchor 16, the embodiments described herein provide a faster solution with less overhead. CS configuration, connection establishing procedures, link encryptions and GATT discovery may only need to be performed once.

With continued reference to FIG. 1, an embodiment of a method for connection handover between anchors 16a and 16b may be described as follows:
1. Anchor 16a may be connected to the digital key 12 after performing the CS configuration phase and subsequently a CS procedure to obtain a distance measurement.
2. Anchor 16a performs a time synchronization with anchor 16b. This may be achieved by using a custom advertising or scanning exchange where timestamps and connection event offsets are exchanged.
3. Anchor 16a suspends transmission over the connection with the digital key 12.
4. Anchor 16a obtains connection parameters and forwards them to anchor 16b over the CAN bus.
5. Anchor 16b uses the connection parameters received from step 4., (which include Link Layer information identifying the connection as well as connection event timing information), to synchronize the connection events.
6. Anchor 16b may inform anchor 16a that the synchronization was successful. Alternatively, if the synchronization was not successful, then the handover is aborted and anchor 16a resumes transmission to the digital key 12.
7. Anchor 16a may retrieve additional context data (e.g., BLE host data and CS configuration data), and then send this data to anchor 16b over the CAN bus.
8. Anchor 16b may then take over the connection and be ready to perform the CS procedure, followed by anchor 16a purging the prior connection.
9. Anchor 16b may then perform a CS procedure to obtain a distance measurement.

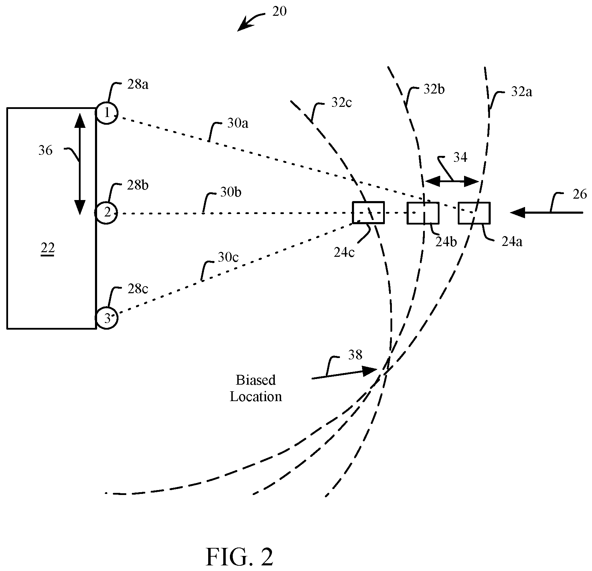

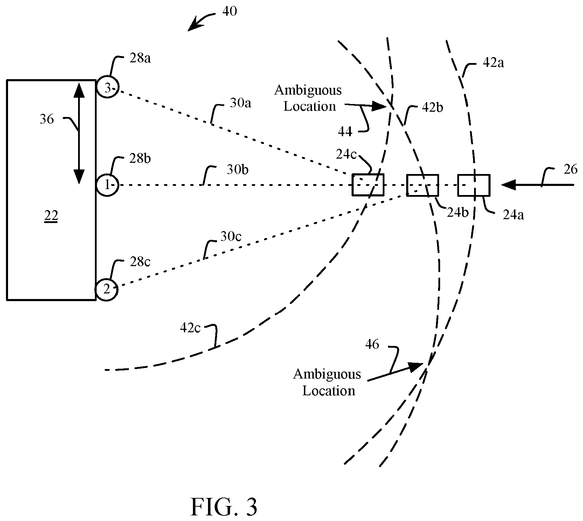

FIG. 2 shows an embodiment 20 of an error introduced by the motion of the user, (and the collocated digital key 12), thereby resulting in determining a biased location from three CS procedures. When executing CS procedures, the sequence of anchor communications may introduce a significant error because one CS measurement may have a duration of hundreds of milliseconds. Even when the user approaches the vehicle 14 at a relatively slow walking speed of two meters per second, a measured location of the digital key 12 may be incorrect due to location bias (see FIG. 2) or location ambiguity (see FIG. 3). With reference to FIG. 2, a vehicle 22 (e.g. a smartphone or key fob), may communicate with a digital key at a first position 24a, a second position 24b and a third position 24c as the digital key moves towards the vehicle 22 at a direction 26. In one embodiment, a user (not shown) with the digital key moves in the direction 26 at three meters per second (e.g., a light jogging velocity). At each position 24a, 24b and 24c, the digital key may sequentially communicate with anchors 28a, then 28b and finally 28c, over respective communication channels 30a, 30b and 30c. The respective distance measurements obtained from using anchors 28a, 28b and 28c (prior to trilateration), may define respective location arcs 32a, 32b and 32c, whereupon the digital key may be located. In the embodiment 20, the digital key may move a distance 34 of one meter, and the anchors 28a, 28b and 28c may be separated by a distance of two meters. By using two or three of the distances obtained from the anchors 28a, 28b and 28c, a determined location of the digital key will be at a biased location 38. This biased location will be in error due to the interaction of the speed at which the digital key approaches the vehicle 22 and the time lag required for CS distance measurement (e.g., in one embodiment, one distance measurement may require 300 milliseconds). Choosing a different sequence of anchors may give yet a different biased location.

FIG. 3 shows an embodiment 40 of an error introduced by the motion of the user, (and the collocated digital key 12), thereby resulting in determining an ambiguous location from three CS procedures performed in a different sequence than FIG. 2. In FIG. 3, the location arcs 42a, 42b and 42c associated with the respective digital key positions 24a, 24b and 24c, result in ambiguous locations 44 and 46 when performing trilateration.

In FIG. 2 the first selected, second selected and third selected anchors are 28a, 28b and 28c respectively, resulting in a biased location 38. In FIG. 3, the first selected, second selected and third selected anchors are 28b, 28c and 28a respectively, resulting in ambiguous locations 44 and 46. Accordingly, a systematic sequence of selecting the anchors for CS procedures is required to provide an accurate location of the digital key using trilateration.

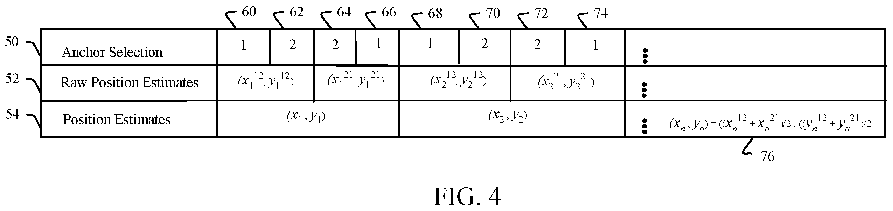

FIG. 4 shows a tabular view of an anchor sequence to overcome the location errors described with respect to FIG. 2 and FIG. 3. While the biased location 38 of FIG. 2 may be mitigated with close form equations, significant location errors may still result from errors in determining the velocity of the digital key, particularly in a dense multipath environment or when a link budget is low (e.g. the link layer of a Bluetooth LE stack). In one embodiment, a differential anchor sequence is used, where the anchors are sequentially selected (e.g., "swept") in one direction, then swept in the opposite direction and finally the results of the two sweeps are averaged, thus removing the location bias. The embodiment of FIG. 4 illustrates the differential anchor sequencing with two anchors "1" and "2" (e.g., anchors 28a and 28b of FIG. 2).

In FIG. 4, the first row 50 shows an anchor selection of 1, 2, 2,1, 1, 2, 2, and 1, corresponding to columns 60, 62, 64, 66, 68, 70, 72 and 74. This sequence of anchor selections provides alternating distance measurements with connection handoffs from 1 to 2, and then 2 to 1. The second row 52 shows raw position estimates made from a forward anchor selection (e.g., 1 to 2), at columns 60 and 62, and a corresponding reverse anchor selection (e.g., 2 to 1) at columns 64 and 66. The third row 54 shows a resulting position estimate determined by averaging the results of the forward and reverse anchor selection. A similar averaging occurs for a second position estimate using columns 68 through 74. The cell 76 provides a generalized formula for determining the position estimates of a series of positions (e.g., where n=3, the formula may be used to calculate the positions 24a, 24b and 24c of FIG. 2). While FIG. 4 illustrates differential anchor sequencing with two anchors, a similar method may be used for more than two anchors. In some embodiments, additional improvements to determining the location of the digital key may be realized by using linear quadratic estimation (e.g., with a Kalman filter) to interpolate a series of distance measurements obtained by CS.

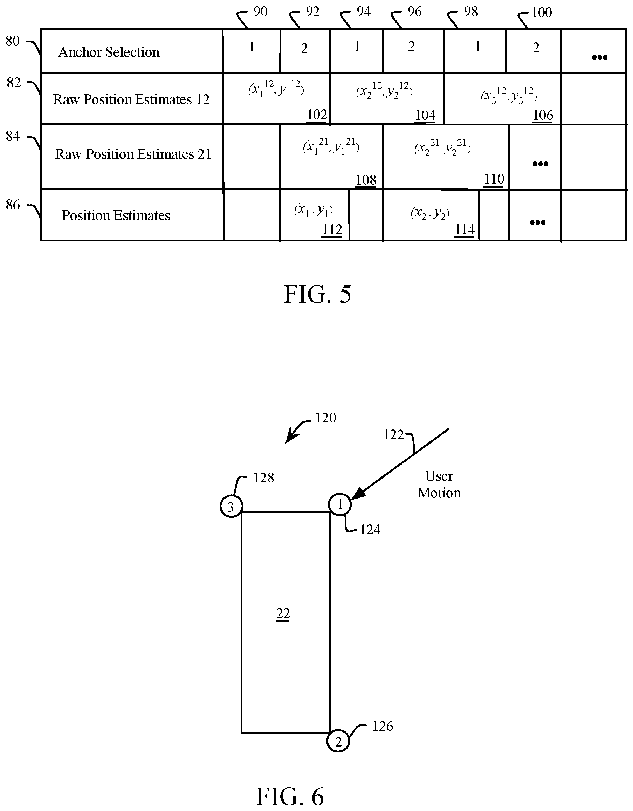

FIG. 5 shows a tabular view of an embodiment of an anchor sequence improving upon the sequence shown in FIG. 4. Specifically, the first row 80 shows an anchor selection across columns 90, 92, 94, 96, 98 and 100 of 1, 2, 1, 2, 1 and 2, thus increasing the rate of determining a digital key position by 4/3. Separate determinations of the forward anchor selection (at the second row 82) and the reverse anchor selection (at the third row 84) are averaged to provide a position estimate without location bias (at the fourth row 86). The position estimate of cell 102 may be averaged with the position estimate of cell 108 to generate an unbiased first position at cell 112. The position estimate of cell 104 may be averaged with the position estimate of cell 110 to generate an unbiased second position at cell 114. The sequence repeats at cell 106 to estimate a third position. In one embodiment, based on successive position measurements, differential anchor selection may be terminated if a determined velocity of the digital key is below a velocity threshold, thus increasing the determination of the digital key by a factor of two.

FIG. 6 shows an embodiment 120 of a motion of a user with a digital key moving along a path 122, towards a first anchor 124 of a vehicle 22. The first anchor 124 may be interposed with a second anchor 126 and a third anchor 128. In FIG. 6, depending upon factors such as signal quality received from the digital key, and change to user motion or position, three anchors 124, 126 and 128 may need to be used. In one embodiment, a pair of anchors 124 and 126 may be replaced with a pair of anchors 124 and 128. Similarly in another embodiment, a pair of anchors 124 and 128 may be replaced with a pair of anchors 124 and 126.

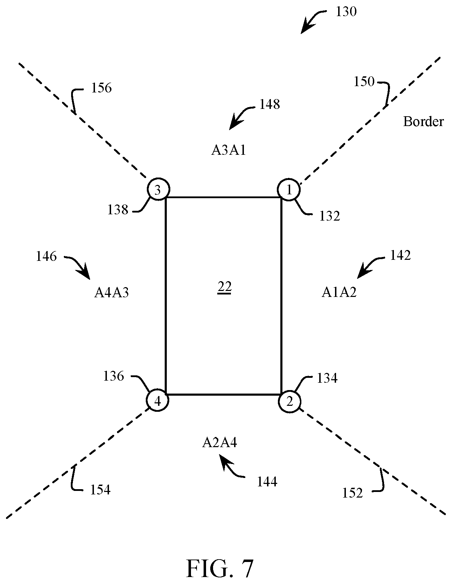

FIG. 7 shows an embodiment 130 with border lines between several signal coverage areas of the anchors of a vehicle 22. The embodiment 130 includes a first, second, third and fourth anchor 132, 134, 136 and 138 respectively coupled to a vehicle 22. A signal coverage area A1A2 142 is defined between the first anchor 132 and the second anchor 134. A signal coverage area A2A4 144 is defined between the second anchor 134 and the fourth anchor 136. A signal coverage area A4A3 146 is defined between the fourth anchor 136 and the third anchor 138. A signal coverage area A3A1 148 is defined between the third anchor 138 and the first anchor 132. A border region 150 is defined between signal coverage areas A3A1 148 and A1A2 142. A border region 152 is defined between signal coverage areas A1A2 142 and A2A4 144. A border region 154 is defined between signal coverage areas A2A4 144 and A4A3 146. A border region 156 is defined between signal coverage areas A4A3 146 and A3A1 148.

In one embodiment, a method for determining a location of a digital key close to a border 150, 152, 154 or 156 may use the following sequence as shown for four anchors. In other embodiments, more than four anchors may be used. As the digital key approaches the vehicle 22, an anchor with the highest signal quality, (as received by the vehicle 22 from the digital key) may be defined as the first anchor. As shown in FIG. 7, the first anchor is anchor 132. CS procedure sweeps are performed with the anchor sequence 1-2-2-1 and 1-3-3-1. Specifically, measure a distance using CS with the first anchor 132. Perform a connection handover to the second anchor 134 and perform a distance measurement using CS with the second anchor 134.

Perform a connection handover to the third anchor 138 and perform a distance measurement using CS with the third anchor 138. Perform a connection handover to the second anchor 134 and perform a distance measurement using CS with the second anchor 134. Perform a connection handover to the third anchor 138 and perform a distance measurement using CS with the third anchor 138. Perform a connection handover to the first anchor 132 and perform a distance measurement using CS with the first anchor 132. This will result in five connection handovers and eight usable measurements. Based on the measurement results, either the signal coverage area A1A2 142 or A3A1 148 may be used. For example, if A1A2 142 is chosen a 1-2-1 sweep may then be initiated. Signal sweeping may continue until the digital key approaches a border 150, 152, 154 or 156 or until a car access zone is reached. If the car access zone is reached, the car may unlock. If the signal sweeps indicate that the digital key is close to a border 150, 152, 154 or 156, then the above-mentioned sweeps involving three anchors may be repeated.

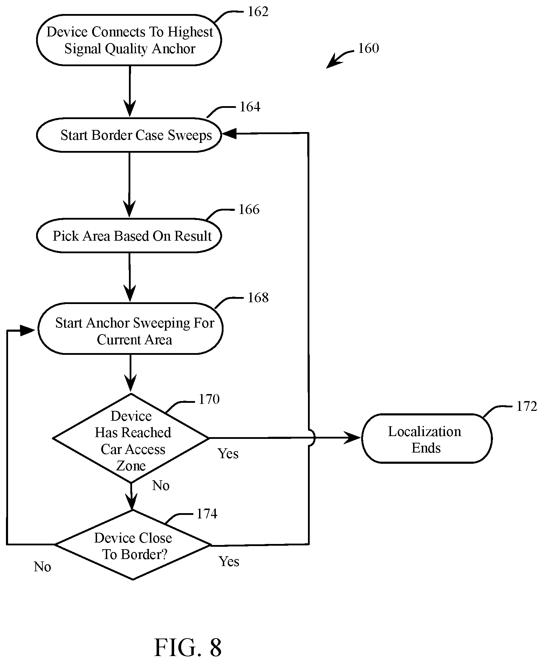

FIG. 8 shows an embodiment 160 of a method for CS localization with the anchors of FIG. 7. At 162, a device connects to a highest signal quality anchor. At 164, border case sweeps are started. At 166, a signal coverage area is chosen based on the results of the border case sweeps. At 168, anchor sweeps are started or the current area (chosen at step 166). At 170, determine if the digital key device has reached a car access zone. If yes, then localization ends at 172. Otherwise, determine at 174 if the digital key device is close to a border 150, 152, 154 or 156. If the digital key device is not close to a border, then return to step 168, otherwise return to step 164, to repeat the border case sweeps, thereby determining the pair of anchors to use for localizing the device with respect to the car access zone.

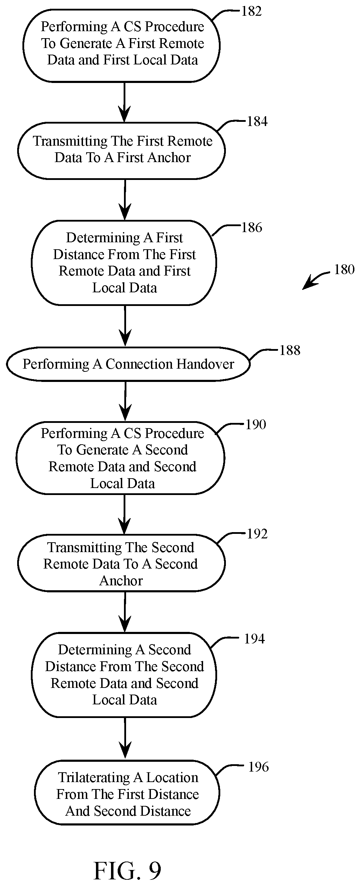

FIG. 9 shows an embodiment 180 of a method for CS localization with multiple vehicle anchors. With continued reference to FIG. 1 and FIG. 9, at 182 a CS procedure is performed to generate a first remote data and a first local data. At 184, the first remote data is transmitted to a first anchor (e.g., anchor 16a). At 186, a first distance is determined from the first remote data and first local data. At 188, a connection handover (e.g., from anchor 16a to 16b) may be performed. At 190, a CS procedure generates a second remote data and local data. At 192, the second remote data is transmitted to the second anchor. At 194, a second distance is determined from the second remote data and second local data. At 196, a location (of the digital key 12) is trilaterated from the first distance and second distance.

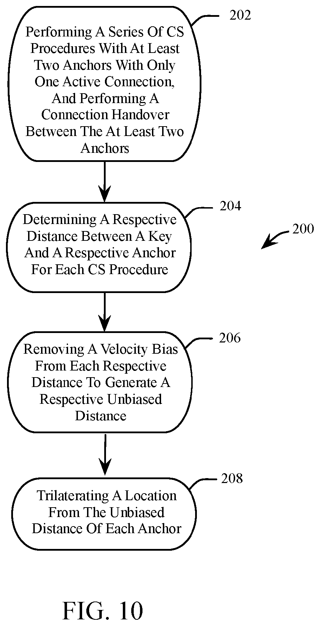

FIG. 10 shows an embodiment 200 of a method for CS localization with multiple vehicle anchors. With continued reference to FIG. 1, FIG. 4, FIG. 5 and FIG. 10, at 202 a series of CS procedures is performed with at least two anchors with only one active connection (e.g. only one of 18a, 18b and 18c at one time), and performing a connection handover. At 204, a respective distance between a digital key 12 and a respective anchor (e.g., 16a and 16b) is determined. At 206, a velocity bias is removed from each determined distance to generate an unbiased distance, (see FIG. 4 and FIG. 5). At 208, a location (of the digital key 12) is trilaterated using each of the determined unbiased distances.

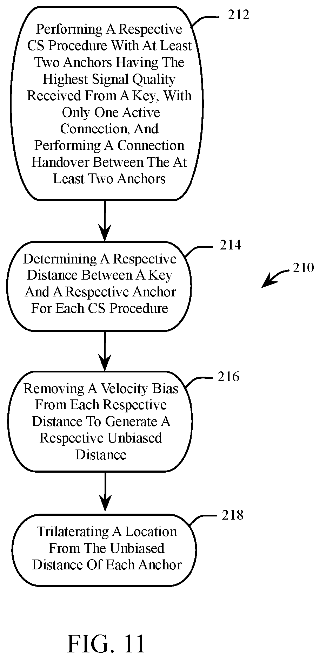

FIG. 11 shows an embodiment 210 of a method for CS localization with multiple vehicle anchors. With continued reference to FIG. 1, FIG. 4, FIG. 5 and FIG. 11, at 212 a respective CS procedure is performed with at least two anchors having the highest signal quality received from the digital key 12. In a preferred embodiment, the determination of signal quality (either with circuitry or software) may be collocated with an anchor 16. In another embodiment, the determination of signal quality may be performed with the digital key 12 by measuring signal quality of a transmission from the anchor 16 to the digital key 12, rather than from the digital key 12 to the anchor 16. a connection handover may then be performed between the at least two anchors 16. At 214, a respective distance between the digital key 12 and a respective anchor is determined for each CS procedure. At 216, a velocity bias is removed from each determined distance to generate an unbiased distance, (see FIG. 4 and FIG. 5). At 218, a location (of the digital key 12) is trilaterated using each of the determined unbiased distances.

As will be appreciated, at least some of the embodiments as disclosed include at least the following. In one embodiment, a method for channel sounding localization with multiple vehicle anchors comprises performing a Channel Sounding (CS) procedure to generate a first remote data at a digital key and a first local data at a first one of a plurality of anchors. The first remote data is transmitted to the first anchor. A first distance between the digital key and the first anchor is determined from the first remote data and the first local data. A connection handover from the first anchor to a second one of a plurality of anchors is performed. The CS procedure is performed to generate a second remote data at the digital key and a second local data at the second anchor. The second remote data is transmitted to the second anchor. A second distance between the digital key and the second anchor is determined from the second remote data and the second local data. A location of the digital key is trilaterated using at least the first distance and the second distance.

Alternative embodiments of the method for channel sounding localization with multiple vehicle anchors include one of the following features, or any combination thereof. The first anchor is chosen from a plurality of anchors coupled to a vehicle, the first anchor maximizing a highest signal quality received from the digital key. A communication channel is established between the digital key and the first anchor by executing a Bluetooth Low Energy CS configuration step. A determination of the first distance with the first anchor is repeated following the determination of the second distance with the second anchor, to generate a revised first distance, and the first distance is averaged with the revised first distance to determine an unbiased first distance. The determination of the revised first distance and the unbiased first distance is suspended in response to a determined velocity of the digital key being below a threshold velocity. The determination of the first distance and the second distance is alternated to determine the unbiased first distance and an unbiased second distance. The second anchor is chosen from a plurality of anchors coupled to a vehicle comprising a second highest signal quality received from the digital key. A proximity of the digital key to a border of a signal coverage area of the vehicle is determined by determining the location of the digital key using the first anchor and the second anchor, and determining another location of the digital key using the first anchor and a third anchor, wherein the first anchor is interposed with the second anchor and the third anchor at the border, and the digital key is determined to be at the border based on one or more of the location and the another location. Performing the connection handover comprises time synchronizing the first anchor to the second anchor by exchanging at least one of a timestamp and a connection event offset using an Advertising Physical Link layer of a Bluetooth Low Energy stack; suspending transmission with the digital key by the first anchor; obtaining at least one connection parameter with the first anchor; transmitting the at least one connection parameter from the first anchor to the second anchor; synchronizing the second anchor to the first anchor with the at least one connection parameter; informing the first anchor, from the second anchor whether the synchronization was successful; retrieving by the first anchor and transmitting to the second anchor, an additional context data and purging a connection between the first anchor and the digital key, in response to the synchronization being successful; and aborting the connection handover in response to the synchronization being unsuccessful. A noise value of the location is reduced by performing a linear estimation with a Kalman filter of a plurality of previously determined locations of the digital key.

In another embodiment, a method for channel sounding localization with multiple vehicle anchors comprises performing a series of respective Channel Sounding (CS) procedures between a digital key and at least two of a plurality of anchors of a vehicle, wherein only one active connection is maintained between the digital key and the at least two anchors, and a connection handover is performed to sequentially switch the respective one active connection with the digital key to each of the at least two anchors. A respective distance between the digital key and the respective anchor is determined from a respective remote data of the digital key and a respective local data of the respective anchor for each respective CS procedure. A velocity bias is removed from each respective distance to generate a respective unbiased distance. A location of the digital key is trilaterated from the respective unbiased distance determined from each of the at least two anchors.

Alternative embodiments of the method for channel sounding localization with multiple vehicle anchors include one of the following features, or any combination thereof. Performing the series of Bluetooth CS procedures comprises a first Bluetooth CS procedure between the digital key and a first anchor to determine a first distance, followed by a second Bluetooth CS procedure between the digital key and a second anchor to determine a second distance, followed by a third Bluetooth CS procedure between the digital key and the first anchor to determine a third distance, followed by a fourth Bluetooth CS procedure between the digital key and the second anchor to determine a fourth distance, wherein a first average of the first distance and the third distance is used for the respective unbiased distance determined from the first anchor and a second average of the second distance and the fourth distance is used for the respective unbiased distance determined from the second anchor. Generating the respective unbiased distance comprises averaging a respective distance determined by a first one of the at least two anchors before the connection handover with a respective subsequent distance determined by the first one anchor after the connection handover. Removing the velocity bias is suspended in response to a determined velocity of the digital key being below a threshold velocity. The at least two anchors are chosen to have a respective first highest and second highest signal quality received from the digital key.

In another embodiment, a method for channel sounding localization with multiple vehicle anchors comprises performing a respective Channel Sounding (CS) procedure between a digital key and at least two of a plurality of anchors of a vehicle, wherein the at least two anchors respectively comprise the first and second highest signal quality received from the digital key, and wherein only one active connection is maintained between the digital key and the at least two anchors, and a connection handover is performed to sequentially switch the respective one active connection with the digital key to each of the two anchors. A respective distance between the digital key and the respective anchor is determined for each respective CS procedure. A velocity bias is removed from each respective distance to generate a respective unbiased distance. A location of the digital key is trilaterated from the respective unbiased distance of the at least two anchors.

Alternative embodiments of the method for channel sounding localization with multiple vehicle anchors include one of the following features, or any combination thereof. The respective distance is determined for each respective CS procedure from a respective remote data of the digital key and a respective local data of the respective anchor. A respective remote data is transmitted to the respective anchor with a Bluetooth Generic Attribute Profile ranging service. A door of the vehicle is unlocked in response to the location of the digital key being within an access zone of the vehicle. At least one connection parameter between a respective anchor and the digital key is shared over a Controller Area Network bus with every anchor coupled to the vehicle.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Unless stated otherwise, terms such as "first" and "second" are used to arbitrarily distinguish between the elements such terms describe. Thus, these terms are not necessarily intended to indicate temporal or other prioritization of such elements.

## Claims

1. A method for channel sounding localization with multiple vehicle anchors comprising:
performing a Channel Sounding (CS) procedure to generate a first remote data at a digital key and a first local data at a first one of a plurality of anchors;
transmitting the first remote data to the first anchor;
determining a first distance between the digital key and the first anchor from the first remote data and the first local data;
performing a connection handover from the first anchor to a second one of the plurality of anchors;
performing the CS procedure to generate a second remote data at the digital key and a second local data at the second anchor;
transmitting the second remote data to the second anchor;
determining a second distance between the digital key and the second anchor from the second remote data and the second local data; and
trilaterating a location of the digital key using at least the first distance and the second distance.

2. The method of claim 1 wherein the first anchor is chosen from a plurality of anchors coupled to a vehicle, the first anchor maximizing a highest signal quality received from the digital key.

3. The method of claim 1 or of claim 2 further comprising establishing a communication channel between the digital key and the first anchor by executing a Bluetooth Low Energy CS configuration step.

4. The method according to any preceding claimfurther comprising repeating a determination of the first distance with the first anchor following the determination of the second distance with the second anchor, to generate a revised first distance, and averaging the first distance with the revised first distance to determine an unbiased first distance.

5. The method of claim 4 further comprising suspending the determination of the revised first distance and the unbiased first distance in response to a determined velocity of the digital key being below a threshold velocity.

6. The method of claim 4 further comprising alternating the determination of the first distance and the second distance to determine the unbiased first distance and an unbiased second distance.

7. The method according to any preceding claimfurther comprising choosing the second anchor from a plurality of anchors coupled to a vehicle comprising a second highest signal quality received from the digital key.

8. The method of claim 7 further comprising determining a proximity of the digital key to a border of a signal coverage area of the vehicle by determining the location of the digital key using the first anchor and the second anchor, and determining another location of the digital key using the first anchor and a third anchor, wherein the first anchor is interposed with the second anchor and the third anchor at the border, and the digital key is determined to be at the border based on one or more of the location and the another location.

9. The method according to any preceding claimwherein performing the connection handover comprises:
time synchronizing the first anchor to the second anchor by exchanging at least one of a timestamp and a connection event offset using an Advertising Physical Link vlayer of a Bluetooth Low Energy stack;
suspending transmission with the digital key by the first anchor;
obtaining at least one connection parameter with the first anchor;
transmitting the at least one connection parameter from the first anchor to the second anchor;
synchronizing the second anchor to the first anchor with the at least one connection parameter;
informing the first anchor, from the second anchor whether the synchronization was successful;
retrieving by the first anchor and transmitting to the second anchor, an additional context data and purging a connection between the first anchor and the digital key, in response to the synchronization being successful; and
aborting the connection handover in response to the synchronization being unsuccessful.

10. The method according to any preceding claimfurther comprising reducing a noise value of the location by performing a linear estimation with a Kalman filter of a plurality of previously determined locations of the digital key.

11. A method for channel sounding localization with multiple vehicle anchors comprising:
performing a series of respective Channel Sounding (CS) procedures between a digital key and at least two of a plurality of anchors of a vehicle, wherein only one active connection is maintained between the digital key and the at least two anchors, and a connection handover is performed to sequentially switch the respective one active connection with the digital key to each of the at least two anchors;
determining a respective distance between the digital key and the respective anchor from a respective remote data of the digital key and a respective local data of the respective anchor for each respective CS procedure;
removing a velocity bias from each respective distance to generate a respective unbiased distance; and
trilaterating a location of the digital key from the respective unbiased distance determined from each of the at least two anchors.

12. The method of claim 11 wherein performing the series of Bluetooth CS procedures comprises a first Bluetooth CS procedure between the digital key and a first anchor to determine a first distance, followed by a second Bluetooth CS procedure between the digital key and a second anchor to determine a second distance, followed by a third Bluetooth CS procedure between the digital key and the first anchor to determine a third distance, followed by a fourth Bluetooth CS procedure between the digital key and the second anchor to determine a fourth distance, wherein a first average of the first distance and the third distance is used for the respective unbiased distance determined from the first anchor and a second average of the second distance and the fourth distance is used for the respective unbiased distance determined from the second anchor.

13. The method of claim 11 or claim 12, wherein generating the respective unbiased distance comprises averaging a respective distance determined by a first one of the at least two anchors before the connection handover with a respective subsequent distance determined by the first one anchor after the connection handover.

14. The method according to any of claim 11 to claim 13, further comprising suspending removing the velocity bias in response to a determined velocity of the digital key being below a threshold velocity.

15. The method according to any of claim 11 to claim 14 wherein the at least two anchors are chosen to have a respective first highest and second highest signal quality received from the digital key.
